Europäisches Patentamt

**European Patent Office**

**Office européen des brevets**

(11) Numéro de publication: **0 151 820**

**A1**

## (12) DEMANDE DE BREVET EUROPEEN

(21) Numéro de dépôt: **84201065.4**

(22) Date de dépôt: **17.07.84**

(51) Int. Cl.⁴: **B 60 P 5/00**
**G 01 G 19/08**

(30) Priorité: **07.12.83 BE 2060278**

(43) Date de publication de la demande:
**21.08.85 Bulletin 85/34**

(84) Etats contractants désignés:
**AT CH IT LI LU SE**

(71) Demandeur: **GEBR. L. & A. GEUSENS in 't verkort :**
**L.A.G., personenvennootschap met beperkte**
**aansprakelijkheid**
**Kanaallaan 54**
**B-3690 Bree(BE)**

(72) Inventeur: **Geusens, Jaak**
**Dennenhof 1**
**B-3690 BREE(BE)**

(74) Mandataire: **Donné, Eddy**
**M.F.J.Bockstael Arenbergstraat 13**
**B-2000 Anvers(BE)**

(54) Camion-réservoir pour le transport de marchandises en vrac à dispositif de pesage assurant un débitage précis.

(57) Camion-réservoir pour le transport de marchandises en vrac, équipé d'un dispositif de pesage assurant un débitage précis, caractérisé en ce qu'il se compose essentiellement d'un réservoir (2), fixé de manière démontable au châssis (4) du véhicule à l'aide d'accouplements, et de cellules de pesage (6), fixées audit réservoir (2) et portées par des pattes (7) de hauteur réglable.

Fig.2

EP 0 151 820 A1

"Camion-réservoir pour le transport de marchandises en vrac à dispositif de pesage assurant un débitage précis"

La présente invention a trait à un camion-réservoir pour le transport de marchandises en vrac, équipé d'un dispositif de pesage destiné à assurer un débitage précis, c'est-à-dire, en d'autres termes, à un camion pour le transport de marchandises en vrac se prêtant à la livraison à domicile de quantités de marchandises en vrac relativement réduites.

Ce camion pour le transport de marchandises en vrac est, en particulier, équipé d'un dispositif de pesage assurant un pesage précis, comme le requiert la livraison à domicile de quantités de marchandises relativement petites, ce dispositif de pesage étant de préférence accompagné d'un printer qui, après le pesage, imprime toutes les données concernées, telles que la nature des marchandises livrées, leurs poids, etc.

Une des caractéristiques du camion pour le transport de marchandises en vrac selon l'invention consiste en ce qu'il se prête au transport simultané de plusieurs marchandises différentes et permet ainsi la livraison à domicile de quantité relativement précises d'une ou de plusieurs sortes de produits.

Le camion pour le transport de marchandises en vrac selon l'invention à dispositif de pesage assurant un débitage précis, doté des caractéristiques susnommées et d'autres caractéristiques, se compose à cet effet d'un réservoir, fixé de manière démontable au châssis du véhicule à l'aide d'accouplements, et de cellules de pesage coopérant avec ledit réservoir et portées par des pattes de hauteur réglable.

Les caractéristiques et avantages de l'invention ressortiront plus clairement de la description détaillée suivante d'un mode de mise en oeuvre préféré, donnée exclusivement à titre d'exemple sans la moindre intention restrictive, avec référence aux dessins annexés, où

la figure 1 représente de manière schématique une vue en perspective d'un camion selon l'invention pour le transport de marchandises en vrac, équipé d'un dispositif de pesage et de débitage précis;

la figure 2 représente une vue analogue à celle de la figure 1, mais d'une variante d'exécution;

la figure 3 représente en vue latérale un mode d'exécution de l'invention, basé sur la disposition illustrée par la figure 2;

la figure 4 représente une vue du véhicule selon la figure 2, regardé dans la direction indiquée par le flèche F4 de cette dernière;

la figure 5 représente à plus grande échelle la partie indiquée par F5 dans la figure 3;

la figure 6 représente une vue de la partie du véhicule illustrée par la figure 5, regardée dans la direction indiquée par la flèche F6 de cette dernière;

la figure 7 représente à plus grande échelle la partie indiquée par F7 dans la figure 3;

la figure 8 représente une vue de la partie du véhicule illustrée par la figure 7, regardée dans la direction indiquée la flèche F8;

la figure 9 représente à plus grande échelle la partie indiquée par F9 dans la figure 5; et

la figure 10 représente une coupe pratiquée suivant la ligne X-X de la figure 9.

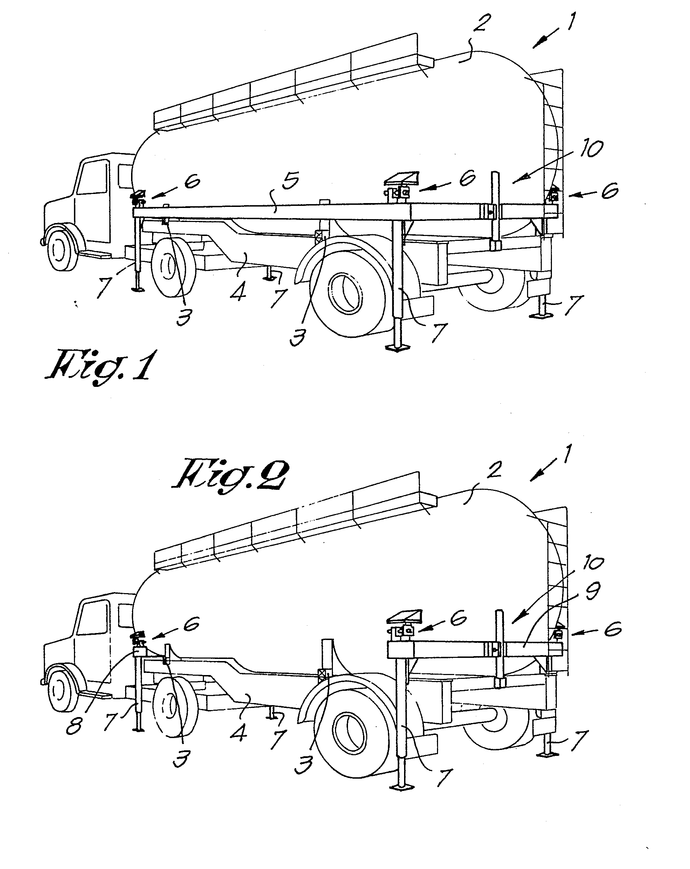

La figure 1 représente un camion-réservoir 1 pour le transport de marchandises en vrac, dont le réservoir 2 est fixé de manière démontable au châssis 4 à suspension élastique du véhicule, à l'aide d'accouplements déconnectables, dont dans le présent cas, deux accouplements sont prévus de part et d'autre.

Dans ce mode d'exécution de l'invention est prévu un cadre 5, fixé au réservoir 2 par l'entremise de quatre cellules de pesage 6, à savoir par une cellule de pesage à chacun des quatre angles du cadre, une patte 7 sous forme d'un cylindre hydraulique étant prévue à proximité de chaque cellule de pesage.

Un camion-réservoir pour le transport de marchandises en vrac du genre décrit ci-dessus se prête au pesage et au débitage exact de quantités de produits en vrac relativement réduites.

Il suffit à cet effet, lorsque le véhicule est arrivé à destination, de déconnecter les accouplements 3 pour libérer le réservoir 2 du châssis 4, et d'étendre ensuite les pattes 7. L'extension des pattes sert à soulever, de manière réglable, le réservoir non seulement pour le libérer du châssis 4, mais également pour mettre le cadre 5 avec le réservoir 2 en une position parfaitement horizontale et le maintenir en cette position, ce qui est indispensable pour assurer la précision du pesage, c'est-à-dire pour assurer, lors du pesage, une verticalité parfaite des forces de mesure agissant dans les cellules 6.

Dès que le cadre 5 se trouve en la position horizontale requise, l'ensemble est pesé et le poids de la masse à livrer ou livrée est déterminée par simple défalcation.

Après la livraison de la quantité de marchandise voulue, les pattes 7 sont de nouveau retirées pour remettre le réservoir 2 sur le châssis 4 et l'y fixer au moyen des accouplements 3, de manière à libérer les cellules de pesage 6, qui sont ainsi déchargées et restent au repos pendant les déplacements du véhicule.

On voit que le système concerné est ainsi intégralement et dûment controlé.

Il est de préférence accompagné d'un calculateur raccordé à un printer se prêtant à l'impression de toutes sortes de documents, tels que des bons de livraison, lettres de voiture, factures, etc., d'après les données mémorisées dans le calculateur.

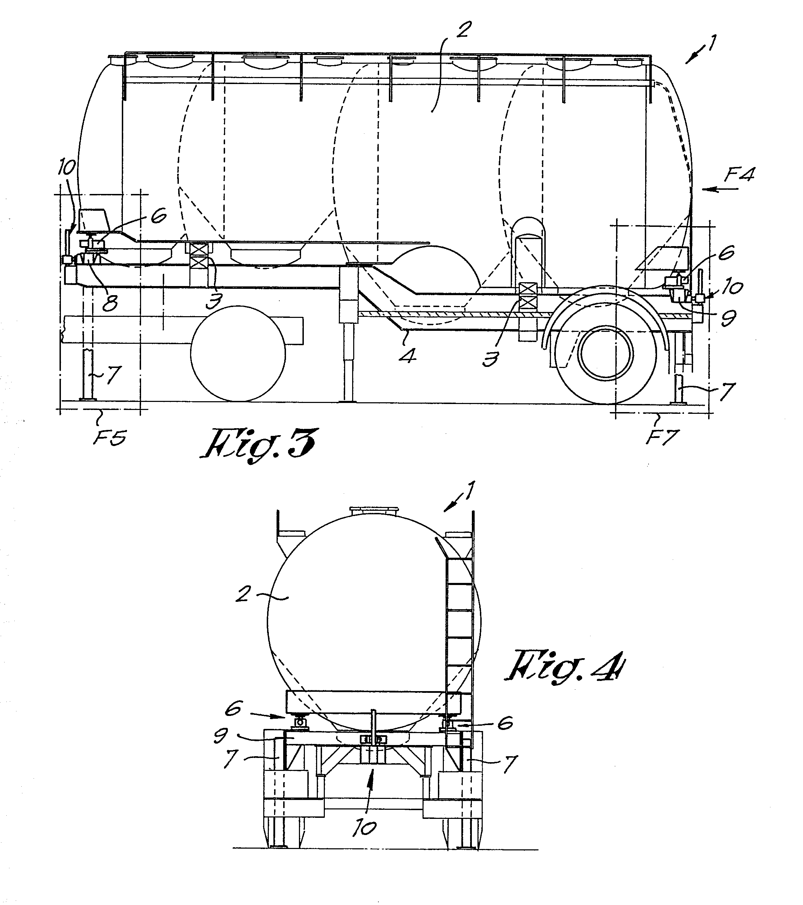

La figure 2 a trait à un système analogue, où le cadre 5 est remplacé par deux traverses 8 et 9.

Dans les deux variantes de mise en oeuvre selon les figures 1 et 2 sera de préférence prévu un guidage 10 entre le réservoir 2 et le châssis du véhicule, situé à chacune des deux extrémités du réservoir et dans le plan médian longitudinal de ce dernier pour ne pas entraver le pesage.

Les pattes 7 pourront, le cas échéant et cela surtout du côté du tracteur, être escamotables par pivotement.

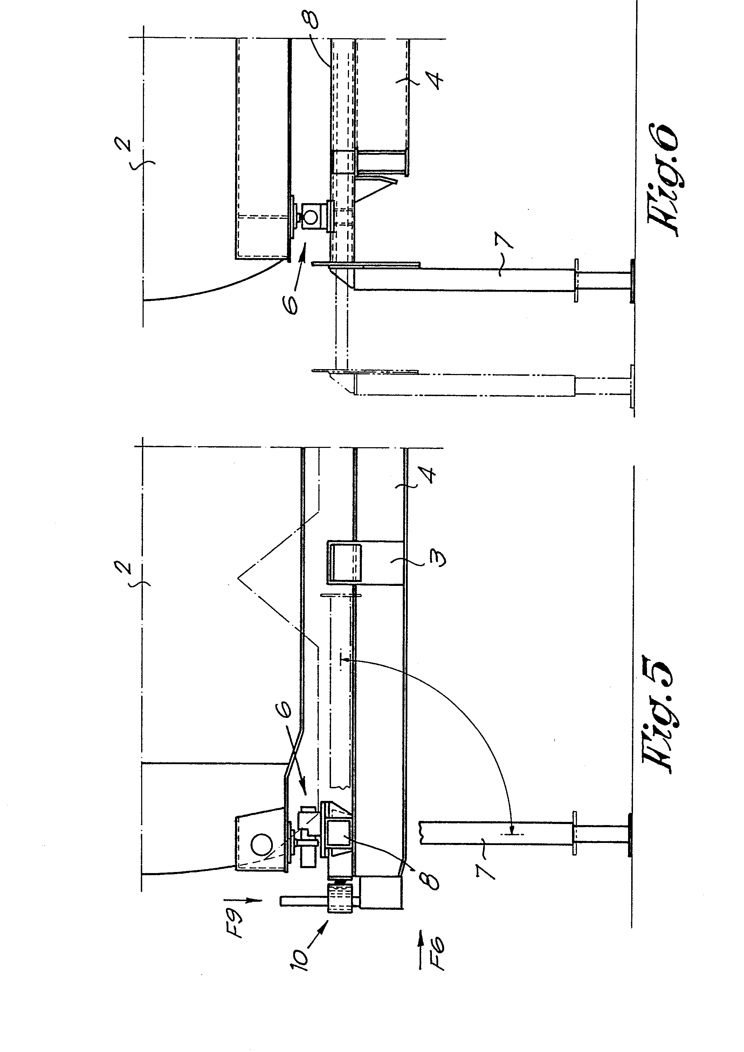

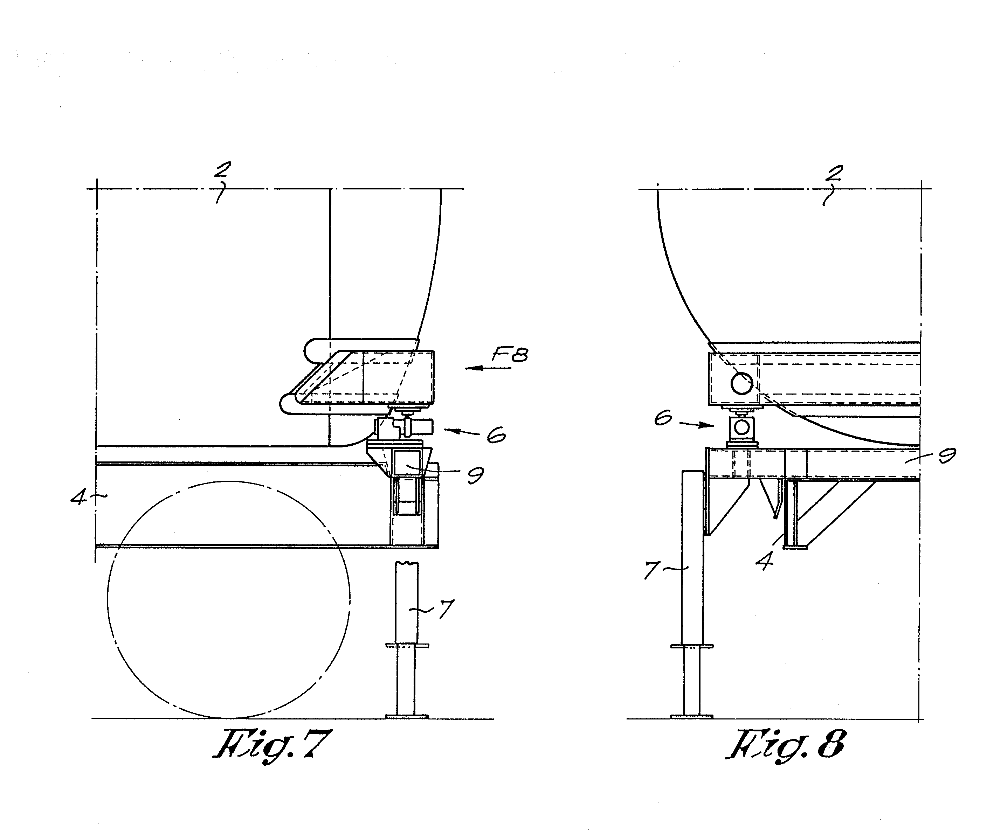

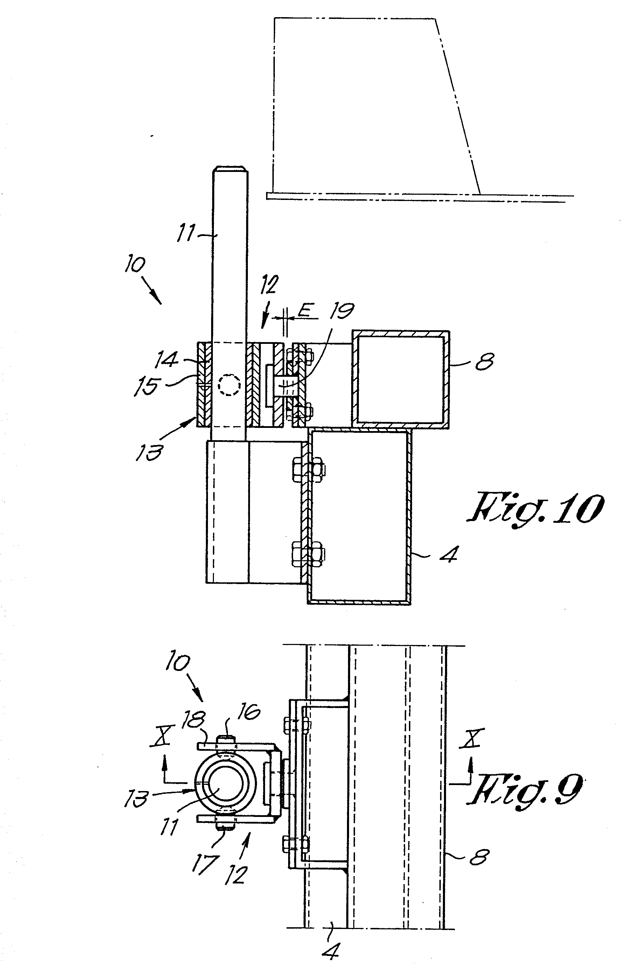

Dans les figures 3-9 est représenté de manière plus détaillée un mode d'exécution pratique du système illustré par la figure 2, dont on voit (figure 3) que le réservoir 2 peut se composer de plusieurs compartiments permettant le transport et la livraison de plusieurs produits différents à la même adresse.

La figure 6 montre que les pattes 7 sont portées par un support extensible permettant leur rabattement à côté des roues du tracteur.

Finalement, les figures 9 et 10 fournissent de plus amples détails concernant les guidages 10, dont chacun comporte essentiellement une tige de guidage proprement dite 11 solidaire du châssis 4 du véhicule, ainsi que des moyens 12 susceptibles de se déplacer par rapport à cette tige. Ces moyens 12 comportent, en l'occurrence, une douille 13 susceptible de coulisser librement sur la tige 11 et se composant ici d'une douille de bronze intérieure 14 et d'une douille d'acier extérieure 15 y frettée.

A la douille intérieure 13 sont fixés deux pivots 16 et 17, qui portent à pivotement libre un étrier 18, articulé à pivotement libre sur un pivot 19 solidaire du cadre 5 ou des traverses 8 et 9.

Enfin, la longueur du pivot 19 est choisie de manière qu'entre l'étrier 18 et la partie voisine du cadre ou des traverses 8 et 9 existe un écartement E suffisant pour permettre un certain déplacement angulaire entre le réservoir 2 et le châssis 4. C'est grâce à la présence desdits guidages 10 que le réservoir 2 est susceptible de se déplacer librement, mais néanmoins de manière controlée, entre des limites déterminées par rapport au châssis 7.

Il va sans dire que l'invention ne se limite pas au mode d'exécution décrit à titre d'exemple dans les lignes précédentes et illustré par les figures ci-annexées, mais que le camion-réservoir concerné, destiné au transport de marchandises en vrac, ainsi que le système de pesage et de débitage précis, dont il est équipé, se prête à toutes sortes de mises en oeuvre au point de vue forme et dimensions, évidemment soumises à la condition de ne pas dépasser le cadre de l'invention défini par les revendications formulées ci-après.

0151820

Revendications.

1.- Camion-réservoir pour le transport de marchandises en vrac, équipé d'un dispositif de pesage assurant un débitage précis, caractérisé en ce qu'il se compose essentiellement d'un réservoir (2), fixé de manière démontable au châssis (4) du véhicule à l'aide d'accouplements (3), et de cellules de pesage (6) coopérant avec ledit réservoir (2) et supportées par des pattes (7) de hauteur réglable.

2.- Camion-réservoir selon la revendication 1, caractérisé en ce que le réservoir pour marchandises en vrac (2) est muni d'accouplements (3) situés en quatre points différents.

3.- Camion-réservoir selon la revendication 1 ou 2, caractérisé en ce que le réservoir pour marchandises en vrac (2) est, au niveau de chaque coin, muni d'une cellule de pesage (6).

4.- Camion-réservoir selon l'une ou l'autre des revendications précédentes, caractérisé en ce qu'à chaque extrémité du réservoir est prévu un guidage (10) entre le châssis du véhicule (4) et les cellules de pesage (6) voisines.

5.- Camion-réservoir selon l'une ou l'autre des revendications précédentes, caractérisé en ce que lesdites cellules de pesage (6) sont montées entre le réservoir (2) et un cadre périphérique commun (5), disposé tout autour du réservoir (2) et muni d'une patte réglable (7) à chacun de ses coins.

6.- Camion-réservoir selon l'une ou l'autre des revendications précédentes, caractérisé en ce que, d'une part, les deux cellules de mesure antérieures (6), et, d'autre part, les deux cellules de mesure postérieures (6) sont fixées sur une traverse (respectivement 8 et 9), portée à chacune de ses deux extrémités par une patte réglable (7).

2

0151820

7.- Camion-réservoir selon l'une ou l'autre des revendications précédentes, caractérisé en ce que lesdites pattes réglables (7) sont extensibles latéralement par rapport au réservoir (2).

8.- Camion-réservoir selon l'une ou l'autre des revendications précédentes, caractérisé en ce que lesdites pattes (7) sont rabattables.

9.- Camion-réservoir selon l'une ou l'autre des revendications précédentes, caractérisé en ce que lesdites pattes (7) se présentent sous forme de cylindres hydrauliques.

10.- Camion-réservoir selon l'une ou l'autre des revendications précédentes, caractérisé en ce qu'à chaque extrémité du réservoir (2), dans son plan médian vertical, est prévu un des guidages susmentionnés (10).

11.- Camion-réservoir pour le transport de marchandises en vrac, équipé d'un dispositif de pesage assurant un débitage précis, selon la revendication 10, caractérisé en ce que chacun desdits guidages (10) se compose d'une tige (11) solidaire du châssis (4) du véhicule et portant, à coulissage libre, une deuille (13), munie de deux pivots coaxiaux diamétralement opposés (16,17), sur lesquels sont articulés à pivotement libre les brides d'un étrier en U (18), articulé d'autre part à pivotement libre sur un pivot (19) formant un angle droit avec les deux pivots susmentionnés (16,17) et avec le cadre (5) ou les traverses (8,9), pivot (19) dont la longueur est choisie de manière qu'entre ledit étrier (18) et ledit cadre (5) ou lesdites traverses (8,9) se maintient un certain écartement lorsque le véhicule se trouve en sa position de roulement.

Fig.1

Fig.2

**Fig.3**

**Fig.4**

**Fig.5**

**Fig.6**

**Fig.8**

**Fig.7**

0151820

Fig.10

Fig.9

Office européen
des brevets

**RAPPORT DE RECHERCHE EUROPEENNE**

EP 84 20 1065

## DOCUMENTS CONSIDERES COMME PERTINENTS

| Catégorie | Citation du document avec indication. en cas de besoin. des parties pertinentes | Revendication concernée | CLASSEMENT DE LA DEMANDE (Int Cl 4) |
|---|---|---|---|
| Y | FR-A-2 159 623 (BADURINA) * Figures 1-3 * | 1 | B 60 P 5/00 G 01 G 19/08 |
| A | | 5 | |
| Y | US-A-3 702 661 (BERRY) * Figures 1-7 * | 1 | |
| A | | 2 | |
| A | DE-U-1 938 458 (SCHAUBSTAHL-WERKE) * Figures 1-4 * | 1,5 | |
| A | DE-A-2 601 834 (FORSS-PARATOR) * Figures 1-4 * | 7,8 | DOMAINES TECHNIQUES RECHERCHES (Int. Cl.4) |
| A | GB-A-1 138 831 (ABELSON MOTORS) * Figures 1-3 * | 8,9 | B 60 P 5/00 G 01 G 19/00 |

Le présent rapport de recherche a été établi pour toutes les revendications

| Lieu de la recherche BERLIN | Date d'achèvement de la recherche 12-03-1985 | Examinateur LUDWIG H J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82